# EUROPÄISCHE PATENTSCHRIFT

(11) **EP 3 724 517 B1**
(45) Veröffentlichungstag und Bekanntmachung des Hinweises auf die Patenterteilung: **26.11.2025**
(21) Anmeldenummer: 18825922.0
(22) Anmeldetag: 11.12.2018
(51) Int. Cl.: F16B 5/02, F16B 37/12, B29C 45/14

(54) **BAUTEIL MIT EINGEFORMTEM DRAHTGEWINDEEINSATZ**
COMPONENT WITH WIRE THREAD INSERT MOULDED THEREIN
COMPOSANT POURVU D'INSERT FILETÉ FILAIRE MOULÉ À L'INTÉRIEUR

(30) Priorität: 12.01.2018 DE 102018100684
(43) Veröffentlichungstag der Anmeldung: 21.10.2020
(73) Patentinhaber: Böllhoff Verbindungstechnik GmbH, 33649 Bielefeld (DE)
(72) Erfinder: DRÜKE, Franz, 32758 Detmold (DE)
(74) Vertreter: HWP Intellectual Property
(86) Internationale Anmeldenummer: PCT/EP2018/084419
(87) Internationale Veröffentlichungsnummer: WO 2019/137723

(56) Entgegenhaltungen:
- DE-A1- 102009 048 160
- DE-A1- 102010 050 221
- DE-A1- 102014 115 984
- DE-B1- 1 575 256
- US-A- 2 363 663
- US-A1- 2010 221 087

## Beschreibung

### 1. Gebiet der Erfindung

Die vorliegende Erfindung betrifft ein Bauteil aus einem thermoplastischen Kunststoff mit einem darin eingeformten Drahtgewindeeinsatz sowie ein entsprechendes Herstellungsverfahren hierfür.

### 2. Hintergrund der Erfindung

Bei der Verbindung von zwei Bauteilen mittels einer Schraube wird einerseits viel Wert auf eine Schraubensicherung gegen selbsttätiges Lösen und andererseits auf eine verlässliche Verbindung zwischen Bauteil und Schraube gelegt, so dass eine hohe Auszugsfestigkeit vorhanden ist. Daher ist es bekannt, insbesondere ein Bauteil aus einem Kunststoff mit einem Drahtgewindeeinsatz zu versehen. Üblicherweise wird hierbei der Drahtgewindeeinsatz nach der Herstellung des Bauteils in eine mit einem Innengewinde versehene Bauteilöffnung eingebracht, beispielsweise mittels eines speziellen Montagewerkzeugs. Beispiele für diese Vorgehensweise finden sich in der US 4,563,119, US 4,645,398, US 4,553,303, US 2,152,681, US 2,363,663, DE102009048160A1 und EP 1,897,659.

Ein besonderes Anwendungsgebiet mit im Vergleich zu anderen Anwendungsgebieten hohen dynamischen Belastungen, insbesondere Vibrationen, ist die Luftfahrtindustrie. Hier bestehen, neben den Anforderungen an die herzustellende Verbindung aufgrund der auftretenden dynamischen Belastungen auch besondere Anforderungen an das verwendete Bauteilmaterial. Derzeit wird eine solche luftfahrttaugliche Schraubenklemmung mittels umspritzter Metalleinleger mit Gewindeverstämmung oder Steigungsverzug realisiert. Alternativ werden sehr aufwändige Bauteile umspritzt, die zusätzlich einen Drahtgewindeeinsatz aufweisen. Nur diese Ausgestaltungen erfüllen bisher die von der Luftfahrtindustrie gewünschten Anforderungen.

Ein Beispiel für ein Bauteil mit einem darin eingeformten Drahtgewindeeinsatz findet sich in der US 3,945,070. Hierbei wird ein Drahtgewindeeinsatz mit einer Gewindesteigung bereitgestellt, die höher ist als die später im Bauteil gewünschte Gewindesteigung des Drahtgewindeeinsatzes. Zur Schraubensicherung kann der Drahtgewindeeinsatz einen zweiten Bereich aufweisen, der eine andere Gewindesteigung aufweist, so dass sich ein Steigungsverzug ergibt. Beim Einformen des Drahtgewindeeinsatzes wird der Drahtgewindeeinsatz aufgrund der Materialschrumpfung beim Erkalten des Materials axial komprimiert, so dass die gewünschte Gewindesteigung resultiert. Bei dem Bauteilmaterial handelt es sich allgemein um Kunststoff oder Metall, wobei weder ein spezielles Anwendungsgebiet noch die damit einhergehenden technischen Anforderungen diskutiert oder berücksichtigt werden.

Die Aufgabe der vorliegenden Erfindung ist es daher, ein Bauteil mit einem darin eingeformten Drahtgewindeeinsatz bereitzustellen, das insbesondere für Anwendungen in der Luftfahrtindustrie geeignet ist und eine verlässliche Schraubensicherung bereitstellt, insbesondere mit einer hohen Wiederholverschaubbarkeit.

### 3. Zusammenfassung der Erfindung

Die obige Aufgabe wird gelöst durch ein Bauteil aus einem thermoplastischen Kunststoff mit einem darin eingeformten Drahtgewindeeinsatz gemäß dem unabhängigen Patentanspruch 1 sowie ein Herstellungsverfahren für ein entsprechendes Bauteil gemäß dem unabhängigen Patentanspruch 8. Vorteilhafte Ausführungsformen und Weiterentwicklungen ergeben sich aus der nachfolgenden Beschreibung, den Zeichnungen sowie den anhängigen Patentansprüchen.

Ein erfindungsgemäßes Bauteil besteht aus einem thermoplastischen Kunststoff mit einer Dauergebrauchstemperatur von mindestens 130 °C und weist einen darin eingeformten Drahtgewindeeinsatz auf, wobei der Drahtgewindeeinsatz ein erstes axiales Ende mit einem ersten Innendurchmesser und ein zweites axiales Ende mit einem zweiten Innendurchmesser umfasst, in axialer Richtung vollständig in das Bauteil eingeformt ist und zwischen dem ersten und dem zweiten axialen Ende mindestens eine verengte Windung mit einem im Vergleich zum ersten und zweiten Innendurchmesser verringerten dritten Innendurchmesser umfasst, die radial nach außen bis zu einer Bauteilinnenwand bewegbar ist.

Insbesondere im Bereich der Luftfahrtindustrie werden aus technologischen sowie aus Kostengründen vermehrt thermoplastische Kunststoffe aus dem Bereich der Hochleistungskunststoffe eingesetzt. Der Begriff Hochleistungskunststoff oder Hochleistungsthermoplast basiert auf einer anwendungsbezogenen, ingenieurstechnischen Einteilung der thermoplastischen Kunststoffe. Hierbei werden generell drei Gebiete unterschieden, nämlich die Standardkunststoffe, die technischen Kunststoffe und die Hochleistungskunststoffe.

Die Hochleistungskunststoffe erfüllen dabei höhere Ansprüche als die Standard- und die technischen Kunststoffe. Insbesondere weisen sie bessere mechanische Eigenschaften, eine höhere Chemikalien- und/oder eine höhere Wärmebeständigkeit auf. Speziell durch die höhere Wärmebeständigkeit wird jedoch oft ihre Verarbeitung erschwert und häufig sind spezielle Maschinen hierfür erforderlich. Weiterhin sind Hochleistungskunststoffe oftmals auf eine bestimmte Eigenschaft spezialisiert, wie beispielsweise die Wärmeformbeständigkeit. Damit stehen sie im Gegensatz zu den technischen Kunststoffen, die ein breites Funktionsspektrum abdecken.

Alle Hochleistungskunststoffe enthalten aromatische Strukturen. Aromatische Strukturen vereinen die beiden wichtigsten Merkmale für die Widerstandsfähigkeit gegen hohe Temperaturen. Einerseits sind sie oxidationsbeständig, da die aromatische Kohlenstoff-Wasserstoff-Bindung deutlich stabiler ist als die aliphatische Kohlenstoff-Wasserstoff-Bindung, wodurch die bei einer thermischen Zersetzung oder Feuer auftretende Radikalbildung erschwert wird. Andererseits ist die Kettensteifheit aromatischer Polymere größer als die von aliphatischen Polymeren, was die Glasübergangstemperatur bzw. im Fall von kristallinen Polymeren den Kristallitschmelzpunkt steigert und die Löslichkeit verringert.

Wie oben angedeutet ist insbesondere die thermische Stabilität eine zentrale Eigenschaft der Hochleistungskunststoffe. Ausgehend von den Eigenschaften der Standardkunststoffe können mechanische und thermische Verbesserungen bereits durch die Zugabe von Verstärkungsstoffen wie Glas- und Kohlenstofffasern, den Zusatz von Stabilisatoren und durch eine Erhöhung des Polymerisationsgrades erzielt werden. Die im Bereich der Hochleistungskunststoffe vorhandene Dauergebrauchstemperatur von mindestens 130 °C wird durch das Ersetzen von aliphatischen durch aromatische Einheiten erreicht. Der Begriff Dauergebrauchstemperatur bezeichnet hierbei die maximale Temperatur, bei der der jeweilige Kunststoff in heißer Luft nach 20.000 Stunden Lagerung höchstens 50 % seiner Ausgangseigenschaften verloren hat. Ergänzend wird in dieser Hinsicht auf die DIN IEC 216 sowie die DIN EN 60216 verwiesen.

Eine höhere Dauergebrauchstemperatur lässt sich durch einen vollständigen Verzicht auf aliphatische Elemente und eine enge Verknüpfung von Aromaten durch funktionelle Gruppen wie Ether-, Sulphon- oder Imid-Gruppen erreichen, so dass Dauergebrauchstemperaturen von mindestens 200 °C bis mindestens 260 °C erzielbar sind. Daher weist der thermoplastische Kunststoff in einer bevorzugten Ausführungsform eine Dauergebrauchstemperatur von mindestens 150 °C, vorzugsweise mindestens 170 °C und besonders bevorzugt von mindestens 190 °C auf.

Der Drahtgewindeeinsatz ist vollständig im erfindungsgemäßen Bauteil angeordnet. Dies bedeutet, dass der Drahtgewindeeinsatz an seiner radialen Außenseite vom Bauteilmaterial umgeben ist. Lediglich im Bereich der mindestens einen verengten Windung existiert ein Freiraum zwischen radialer Außenseite des Drahtgewindeeinsatzes und Bauteilinnenwand. Dies ermöglicht es der mindestens einen verengten Windung beim Einschrauben einer Schraube elastisch auf zu federn, sich also radial nach außen zu bewegen. In einer bevorzugten Ausführungsform ist mindestens eines der axialen Enden axial beabstandet zur Bauteiloberfläche angeordnet. In einer alternativen Ausführungsform ist mindestens eines der axialen Enden bündig mit einer Bauteiloberfläche angeordnet. Auf diese Weise stellt der Drahtgewindeeinsatz direkt an der Bauteiloberfläche eine Eingriffsmöglichkeit für die Schraube bereit. Weiterhin ist der erste Innendurchmesser am ersten axialen Ende und der zweite Innendurchmesser am zweiten axialen Ende vorzugsweise gleich und besonders bevorzugt sind der erste und der zweite Innendurchmesser für den gesamten Drahtgewindeeinsatz konstant. Auf diese Weise weist der Drahtgewindeeinsatz in Einschraubrichtung einer Schraube oder eines mit Außengewinde versehenen Elements die folgenden Bereiche auf: benachbart dem ersten axialen Ende einen ersten Bereich mit dem vorzugsweise konstanten ersten Innendurchmesser, daran anschließend den Bereich mit der mindestens einen verengten Windung mit verringertem dritten Innendurchmesser und danach einen zweiten Bereich benachbart zum zweiten axialen Ende mit dem vorzugsweise konstanten zweiten Innendurchmesser.

Der Bereich der mindestens einen verengten Windung mit verringertem dritten Innendurcliinesser stellt eine Schrauben-Sicherungsfunktion bereit und wird beispielsweise dadurch definiert, dass in einem Bereich von mindestens 360° des Gewindeverlaufs ein Polygon vorgesehen ist. In dem so ausgestalteten Bereich lässt sich die Schraube somit nicht frei Einschrauben, sondern sie muss mit erhöhtem Drehmoment montiert werden. Während dieses Vorgangs federt der Bereich mit der mindestens einen verengten Windung auf und übt eine entsprechende Klemmung auf die Schraube durch die elastische Rückstellkraft des Polygons aus.

Ein Vorteil des erfindungsgemäßen Bauteils ist, dass das Bauteil besonders auf die Anforderungen eines bestimmten Anwendungsgebiets angepasst ist, nämlich die der Luftfahrtindustrie. Ein weiterer Vorteil des erfindungsgemäßen Bauteils ist, dass das Bauteil direkt mit dem gewünschten Drahtgewindeeinsatz mit Schraubensicherungs-Funktion bereitgestellt ist, ohne dass ein gesondertes Einbringen des Drahtgewindeeinsatzes durch einen Werker erforderlich ist. Dementsprechend muss das Bauteil nicht erst mit einem Innengewinde bereitgestellt werden, in das der Drahtgewindeeinsatz eingebracht wird, was insbesondere die Herstellung vereinfacht. Daher ist es nicht mehr erforderlich einen Drahtgewindeeinsatz in ein Innengewinde einzuschrauben. Zusätzlich weist der eingeformte Drahtgewindeeinsatz auf diese Weise eine im Vergleich zum nachträglich eingebrachten Drahtgewindeeinsatz gemäß Stand der Technik höhere Auszugfestigkeit auf.

Im Bereich der Luftfahrtindustrie wird üblicherweise mit einem Steigungsverzug als Schraubensicherung gearbeitet, wie oben dargelegt. Ein weiterer Vorteil der vorliegenden Erfindung und insbesondere des Bereichs mit der mindestens einen verengten Windung mit verringertem dritten Innendurchmesser im Drahtgewindeeinsatz gegenüber der bekannten Vorgehensweise bei Luftfahrtanwendungen ist daher, dass eine alternative Ausführungsform einer Schraubensicherungs-Funktion in diesem Anwendungsgebiet bereitgestellt wird, die zusätzlich eine verbesserte Wiederholverschraubbarkeit bereitstellt. Dies basiert insbesondere auf der sich ergebenden elastischen Wirkungsweise der Schraubensicherung, die über eine Vielzahl von Verschraubungsvorgängen eine gleichbleibende Qualität der Gewindeklemmung gewährleistet.

Bisher ist eine Verwendung von Drahtgewindeeinsätze mit verringertem Innendurchmesser zur Schraubensicherung im Bereich der Luftfahrtindustrie nur in Metallbauteilen mit Bohrung vorgesehen. Kunststoffanwendungen in der Luftfahrt kennen derartige Lösungen nicht. Gemäß Stand der Technik müssen die entsprechenden Drahtgewindeeinsätze immer getrennt mit einem Montagewerkzeug nachträglich in eine Bohrung mit Gewinde eingebracht werden. Dies ist unter anderem deshalb erforderlich, da diese Art der Drahtgewindeeinsätze aufgrund ihrer Fertigung im Übermaß in radialer und axialer Richtung die passende Form des Regelgewindes erst bei der Montage in ein entsprechendes Aufnahmegewinde erhält.

Ein Einformen eines solchen Drahtgewindeeinsatzes ohne spezielle technische Maßnahmen, wie sie sich aus dem später erläuterten erfindungsgemäßen Herstellungsverfahren ergeben, ist auch nicht möglich. Dies würde unter anderem dazu führen, dass auch der Bereich mit Schrauben-Sicherungsfunktion mit Kunststoffmaterial umströmt werden würde. Daher würde die Schraubensicherungs-Funktion verloren gehen, das Auffedern des entsprechenden Bereichs wäre nach der Herstellung des Bauteils blockiert und eine Schraube könnte nicht mehr oder nur mit enormen Montagemomenten in das Bauteil geschraubt werden.

Ein weiterer Vorteil der vorliegenden Erfindung ist daher, dass sie ein Bauteil mit einem Drahtgewindeeinsatz mit einer alternativen Schrauben-Sicherungsfunktion bereitstellt. Zudem entfällt, im Hinblick auf Drahtgewindeeinsätze mit dieser Art der Schrauben-Sicherungsfunktion, ein nachträgliches Einbauen des Drahtgewindeeinsatzes in das Bauteil, was die Herstellung des Bauteils vereinfacht und somit kostengünstiger macht. In diesem Zusammenhang wird auch auf das später diskutierte erfindungsgemäße Herstellungsverfahren verwiesen.

Gemäß der Erfindung ist zwischen den Windungen des Drahtgewindeeinsatzes zwischen dem ersten und dem zweiten axialen Ende zumindest teilweise thermoplastischer Kunststoff vorhanden. Aufgrund dieses Merkmals ist der verwendete Drahtgewindeeinsatz keine metallische Buchse und es muss sich auch nicht um einen speziellen auf Block gewickelten Drahtgewindeeinsatz handeln, bei dem kein Kunststoff bzw. Bauteilmaterial zwischen die Windungen eindringen kann. Vielmehr ist es bei dem vorliegenden Drahtgewindeeinsatz gewünscht, dass Bauteilmaterial während des Herstellungsverfahrens auch zwischen die einzelnen Windungen strömen kann. Im Inneren des Drahtgewindeeinsatzes selbst ist jedoch kein Kunststoff vorhanden, was später im Rahmen des Herstellungsverfahrens erläutert wird. Der axial zwischen den Windungen vorhandene Kunststoff definiert höchstens zusätzlich das durch den Drahtgewindeeinsatz allgemein bereitgestellte Innengewinde.

In einer bevorzugten Ausführungsform des Bauteils weist die mindestens eine Windung mindestens einen Windungsabschnitt mit mindestens einer Sekante auf, die die verengte Windung radial einwärts verengt. Alternativ oder zusätzlich ist es ebenfalls bevorzugt, dass die mindestens eine verengte Windung einen Bereich von 360° des Gewindeverlaufs umfasst. Weiterhin ist es bevorzugt, dass das Bauteil mindestens zwei verengte Windungen aufweist, die jeweils einen Bereich von 360° des Gewindeverlaufs umfassen. Vorzugsweise schließen sich die zwei verengten Windungen aneinander an. Alternativ ist es bevorzugt, dass die zwei verengten Windungen beabstandet sind, beispielsweise durch eine Windung eines größeren Innendurchmessers. Mit jeder dieser Ausgestaltungen ist die Schrauben-Sicherungsfunktion gezielt einstellbar und an den jeweiligen gewünschten Anwendungsfall anpassbar.

In einer weiteren vorteilhaften Ausführungsform des Bauteils ist der thermoplastische Kunststoff ein amorpher Kunststoff. Amorph ist hierbei generell die Bezeichnung für den Zustand eines festen Stoffs, in dem die Bausteine, also Atome, Ionen oder Moleküle, keine periodische Anordnung über einen größeren Bereich, die sogenannte Fernordnung, aufweisen. Die amorphen thermoplastischen Kunststoffe sind in der Ausgangsform transparent. Zusätzlich ist ein Bauteil aus amorphem thermoplastischem Kunststoff hart im Vergleich zu teilkristallinen thermoplastischen Hochleistungskunststoffen. Ein Nachteil im Vergleich zu den teilkristallinen Kunststoffen ist allerdings, dass er eine geringere Chemikalienbeständigkeit aufweist.

In einer bevorzugten Ausgestaltung des Bauteils weist der Drahtgewindeeinsatz das Nennmaß einer Gewindenorm auf, insbesondere eines metrischen ISO-Gewindes oder eines Zoll-Gewindes. Auf diese Weise sind der Drahtgewindeeinsatz und somit auch das Bauteil an ein Außengewinde einer darin zu montierenden Schraube angepasst.

Ein Drahtgewindeeinsatz, insbesondere zur Verwendung in einem erfindungsgemäßen Bauteil, umfasst: ein erstes axiales Ende mit einem ersten Innendurchmesser und ein zweites axiales Ende mit einem zweiten Innendurchmesser, zwischen dem ersten und dem zweiten axialen Ende mindestens eine verengte Windung mit einem im Vergleich zum ersten und zweiten Innendurchmesser verringerten dritten Innendurchmesser, die radial nach außen bewegbar ist, und der Drahtgewindeeinsatz ist in radialer Richtung mit Ausnahme der mindestens einen verengten Windung auf ein gewünschtes Nennmaß gewickelt und weist in axialer Richtung ein Übermaß im Vergleich zum gewünschten Nennmaß auf, so dass der Drahtgewindeeinsatz nicht auf Block gewickelt ist und in axialer Richtung zwischen Windungen des Drahtgewindeeinsatzes ein Freiraum vorhanden ist. Im Hinblick auf den erfindungsgemäßen Drahtgewindeeinsatz wird auf die entsprechenden Ausführungen zum erfindungsgemäßen Bauteil verwiesen. In diesem Zusammenhang ist hervorzuheben, dass der erfindungsgemäße Drahtgewindeeinsatz nur in radialer Richtung bereits das gewünschte Nennmaß aufweist. In axialer Richtung liegen Freiräume zwischen den einzelnen Windungen des Drahtgewindeeinsatzes vor. Anders ausgedrückt bedeutet dies, dass der Drahtgewindeeinsatz nicht auf Block gewickelt ist.

Ein erfindungsgemäßes Herstellungsverfahren für ein erfindungsgemäßes Bauteil umfasst die Schritte: Bereitstellen eines Drahtgewindeeinsatzes, der ein erstes axiales Ende mit einem ersten Innendurchmesser und ein zweites axiales Ende mit einem zweiten Innendurchmesser sowie zwischen dem ersten und dem zweiten axialen Ende mindestens eine verengte Windung mit einem im Vergleich zum ersten und zweiten Innendurchmesser verringerten dritten Innendurchmesser aufweist, Einschrauben eines mit einem Außengewinde versehenen Elements in den Drahtgewindeeinsatz, sodass der Drahtgewindeeinsatz vollständig auf dem mit dem Außengewinde versehenen Element angeordnet ist, wodurch die mindestens eine verengte Windung des Drahtgewindeeinsatzes aufgeweitet wird, Anordnen des mit dem Außengewinde versehenen Elements mit Drahtgewindeeinsatz in einer Gussform, Gießen von thermoplastischem Kunststoff mit einer Dauergebrauchstemperatur von mindestens 130 °C als Bauteilmaterial in die Gussform, wobei der Drahtgewindeeinsatz in axialer Richtung vollständig vom Bauteilmaterial umgeben wird, und Entformen des Bauteils aus der Gussform sowie Ausschrauben des mit dem Außengewinde versehenen Elements, wodurch die mindestens eine verengte Windung in ihre Ausgangsform zurückkehrt und im Bauteil ein Drahtgewindeeinsatz mit mindestens einer verengten Windung vorhanden ist, die radial nach außen bis zu einer Bauteilinnenwand bewegbar ist. Mit dem erfindungsgemäßen Herstellungsverfahren ist das erfindungsgemäße Bauteil herstellbar. In vorteilhaften Ausführungsformen des Herstellungsverfahrens wird ein thermoplastischer Kunststoff mit einer Dauergebrauchstemperatur von mindestens 150 °C und/oder ein amorpher Kunststoff für das Bauteil verwendet. Im Hinblick auf die sich ergebenden Vorteile für das erfindungsgemäße Herstellungsverfahren wird auf die obigen Ausführungen zum erfindungsgemäßen Bauteil verwiesen.

Um das Auffedern des Bereichs des Drahtgewindeeinsatzes mit der mindestens einen verengten Windung zu ermöglichen, wird das mit einem Außengewinde versehenen Element, beispielsweise ein Bolzen oder Spindelkern, derart ausgeführt, dass es den Bereich mit der mindestens einen verengten Windung bereits vor dem Umspritzen definiert aufweitet. Dadurch erkaltet der Kunststoff an der Außenseite der mindestens einen verengten Windung im aufgeweiteten Zustand. Nach dem Erkalten des Kunststoffs und dem Herausspindeln oder Herausschrauben des mit dem Außengewinde versehenen Elements federt die mindestens eine verengte Windung zurück. Auf diese Weise entsteht zwischen erkaltetem Kunststoff, der eine Bauteilinnenwand darstellt, und einer radialen Außenseite der mindestens einen verengten Windung ein Freiraum, der bei der späteren Schraubenmontage durch einen Werker zum elastischen Auffedern genutzt werden kann. Auf diese Weise wird eine besonders verlässliche Schrauben-Sicherungsfunktion durch das Bauteil mit eingeformtem Drahtgewindeeinsatz bereitgestellt.

In einer bevorzugten Ausführungsform fließt während des Gießens von thermoplastischem Kunststoff in die Gussform der thermoplastische Kunststoff zumindest teilweise zwischen die Windungen des Drahtgewindeeinsatzes zwischen dem ersten und dem zweiten axialen Ende. Hierdurch wird definiert, dass der verwendete Drahtgewindeeinsatz keine feste Buchse darstellt oder auf Block gewickelt ist. Auf Block gewickelt in diesem Zusammenhang bedeutet, dass kein axialer Freiraum zwischen den Wendeln des Gewindes vorhanden ist. Genau diese axialen Freiräume sind aber beim hier verwendeten Drahtgewindeeinsatz vorhanden. Der verwendete Drahtgewindeeinsatz entspricht in seinem ursprünglichen Verhalten daher eher einer Druck- oder Zugfeder, die in radialer Richtung nach ihrer Herstellung bereits das gewünschte Maß aufweist. Das gewünschte Maß für die Gewindesteigung, die vorzugsweise kleiner ist als die nach der Herstellung des Drahtgewindeeinsatzes vorhandene Gewindesteigung, wird durch das mit dem Außengewinde versehenen Element, als beispielsweise den Bolzen oder den Spindelkern, vorgegeben. Dementsprechend wird der Drahtgewindeeinsatz in der Gussform mit einem Bolzen oder Spindelkern mit abgestimmtem Gewindemaß gehalten. Neben der Sicherstellung der Maßhaltigkeit des resultierenden Gewindes gewährleistet das Aufschrauben oder Aufspindeln ebenfalls, dass der Kunststoff im axialen Zwischenraum zwischen den Windungen des Drahtgewindeeinsatzes angepasst an die Form der Gewindespindel oder das Außengewinde des Bolzens erkaltet. Das resultierende Gewinde ist also in jedem Fall entsprechend an den Spindelkern oder Bolzen angepasst, auch wenn Kunststoff auf den Gewindeflanken des Drahtgewindeeinsatzes vorliegt.

In einer vorteilhaften Ausführungsform des Herstellungsverfahrens weist die mindestens eine Windung mindestens einen Windungsabschnitt mit mindestens einer Sekante auf, die die verengte Windung radial einwärts verengt. Zusätzlich oder alternativ ist es bevorzugt, dass die mindestens eine verengte Windung einen Bereich von 360° des Gewindeverlaufs umfasst. Weiterhin ist es vorteilhaft, wenn mindestens zwei verengte Windungen vorgesehen sind, die jeweils einen Bereich von 360° des Gewindeverlaufs umfassen. Wie oben dargelegt ist mit jeder dieser Ausgestaltungen die Schrauben-Sicherungsfunktion gezielt einstellbar und an den jeweiligen gewünschten Anwendungsfall anpassbar.

Gemäß der Erfindung weist der Drahtgewindeeinsatz vor der Anordnung auf dem Bolzen eine Steigung auf, die größer ist als die Steigung eines Außengewindes des Bolzens, sodass der Drahtgewindeeinsatz auf dem Bolzen axial komprimiert und im Bereich der mindestens einen verengten Windung radial aufgeweitet wird. Hierdurch wird weiter die ursprüngliche Ausgestaltung des Drahtgewindeeinsatzes als Druckfeder hervorgehoben. Insbesondere weist der Drahtgewindeeinsatz nach seiner Herstellung und vor der Montage auf dem Bolzen in radialer Richtung die erforderliche Maßhaltigkeit auf, mit Ausnahme der mindestens einen verengten Windung. In axialer Richtung weist er jedoch ein Übermaß auf.

In einer weiteren vorteilhaften Ausführungsform des Herstellungsverfahrens weist der Drahtgewindeeinsatz durch den Schritt des Anordnens auf dem Bolzen ein Nennmaß einer Gewindenorm auf, insbesondere eines metrischen ISO-Gewindes oder eines Zoll-Gewindes. Wie oben für das erfindungsgemäße Bauteil erläutert sind somit der Drahtgewindeeinsatz und daher auch das Bauteil an ein Außengewinde einer darin zu montierenden Schraube angepasst.

### 4. Kurzzusammenfassung der Zeichnungen

Nachfolgend wird die vorliegende Erfindung unter Bezugnahme auf die Zeichnungen detailliert beschrieben. Gleiche Bezugszeichen in den Zeichnungen bezeichnen dabei gleiche Bauteile und/oder Elemente. Es zeigen:

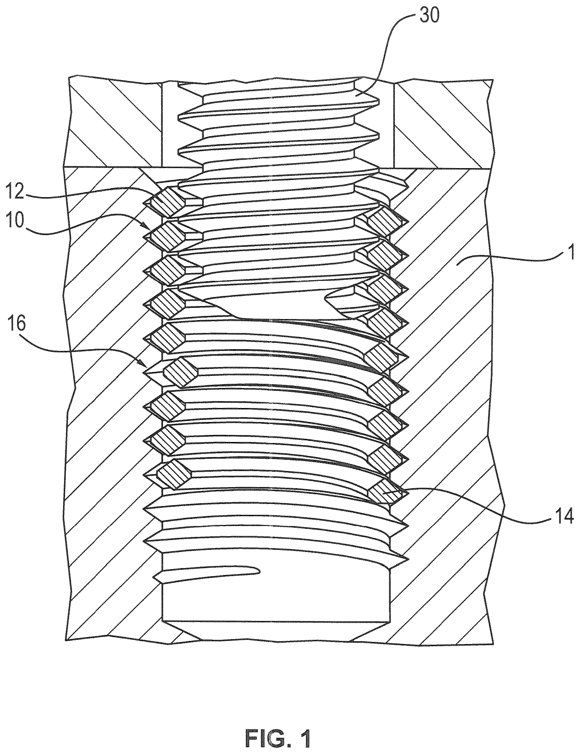

- Figur 1: eine Schnittansicht eines Bauteils mit Drahtgewindeeinsatz und anfänglich eingeschraubte Schraube,
- Figur 2: eine Schnittansicht eines Bauteils mit Drahtgewindeeinsatz und eingeschraubte Schraube und
- Figur 3: einen schematischen Verfahrensablaufs einer Ausführungsform eines erfindungsgemäßen Herstellungsverfahrens.

### 5. Detaillierte Beschreibung der bevorzugten Ausführungsformen

Nachfolgend wird eine Ausführungsform eines erfindungsgemäßen Bauteils 1 anhand der Figu-ren 1 und 2 beschrieben. Bei dem Bauteil 1 handelt es sich um ein Bauteil 1 aus einem thermoplastischen Kunststoff, insbesondere aus einem Hochleistungskunststoff, das vorzugsweise für die Verwendung im Bereich der Luftfahrtindustrie vorgesehen ist.

Der Begriff Hochleistungskunststoff oder Hochleistungsthermoplast basiert auf einer anwendungsbezogenen, ingenieurstechnischen Einteilung der thermoplastischen Kunststoffe, die zwischen Standardkunststoffen, technischen Kunststoffen und die Hochleistungskunststoffen unterscheidet. Wie der Name bereits andeutet erfüllen Hochleistungskunststoffe höhere Ansprüche als die Standard- und die technischen Kunststoffe. Insbesondere weisen sie bessere mechanische Eigenschaften, eine höhere Chemikalien- und/oder eine höhere Wärmebeständigkeit auf. Damit stehen sie insbesondere im Gegensatz zu den technischen Kunststoffen, die ein breites Funktionsspektrum abdecken.

Alle Hochleistungskunststoffe enthalten aromatische Strukturen. Da die aromatische Kohlenstoff-Wasserstoff-Bindung deutlich stabiler ist als die aliphatische Kohlenstoff-Wasserstoff-Bindung, wird aufgrund der Oxidationsbeständigkeit die bei einer thermischen Zersetzung oder Feuer auftretende Radikalbildung erschwert. Weiterhin ist die Kettensteifheit aromatischer Polymere größer als die von aliphatischen Polymeren, was die Glasübergangstemperatur bzw. im Fall von kristallinen Polymeren den Kristallitschmelzpunkt steigert und die Löslichkeit verringert. Aromatische Strukturen vereinen daher die beiden wichtigsten Merkmale für die Widerstandsfähigkeit gegen hohe Temperaturen. Die thermische Stabilität ist daher eine zentrale Eigenschaft der Hochleistungskunststoffe.

Ausgehend von den Eigenschaften der Standardkunststoffe können mechanische und thermische Verbesserungen bereits durch die Zugabe von Verstärkungsstoffen wie Glas- und Kohlenstofffasern, den Zusatz von Stabilisatoren und durch eine Erhöhung des Polymerisationsgrades erzielt werden. Die im Bereich der Hochleistungskunststoffe vorhandene Dauergebrauchstemperatur von mindestens 130 °C wird jedoch erst durch das Ersetzen von aliphatischen durch aromatische Einheiten erreicht. Der Begriff Dauergebrauchstemperatur bezeichnet hierbei die maximale Temperatur, bei der der jeweilige Kunststoff in heißer Luft nach 20.000 Stunden Lagerung höchstens 50 % seiner Ausgangseigenschaften verloren hat. Ergänzend wird in dieser Hinsicht auf die DIN IEC 216 sowie die DIN EN 60216 verwiesen.

Eine höhere Dauergebrauchstemperatur lässt sich durch einen vollständigen Verzicht auf aliphatische Elemente und eine enge Verknüpfung von Aromaten durch funktionelle Gruppen wie Ether-, Sulphon- oder Imid-Gruppen erreichen, so dass Dauergebrauchstemperaturen von mindestens 200 °C bis mindestens 260 °C erzielbar sind. Daher weist der thermoplastische Kunststoff in einer bevorzugten Ausführungsform eine Dauergebrauchstemperatur von mindestens 150 °C, vorzugsweise mindestens 170 °C und besonders bevorzugt von mindestens 190 °C auf. Zusätzlich oder alternativ bevorzugt ist der thermoplastische Kunststoff aus der Gruppe der amorphen Kunststoffe ausgewählt. Amorph ist hierbei generell die Bezeichnung für den Zustand eines festen Stoffs, in dem die Bausteine, also Atome, Ionen oder Moleküle, keine periodische Anordnung über einen größeren Bereich, die sogenannte Fernordnung, aufweisen. Die amorphen thermoplastischen Kunststoffe sind in der Ausgangsform transparent. Zusätzlich ist ein Bauteil aus amorphem thermoplastischem Kunststoff hart im Vergleich zu teilkristallinen thermoplastischen Hochleistungskunststoffen. Ein Nachteil im Vergleich zu den teilkristallinen Kunststoffen ist allerdings, dass er eine geringere Chemikalienbeständigkeit aufweist.

Im Bauteil 1 ist ein Drahtgewindeeinsatz 10 mit einem ersten 12 und einem zweiten axialen Ende 14 vollständig eingeformt. Der Drahtgewindeeinsatz weist benachbart des ersten axialen Endes 12 einen ersten Innendurchmesser und benachbart des zweiten axialen Endes 14 einen zweiten Innendurchmesser auf. Gemäß der dargestellten Ausführungsform ist das erste axiale Ende 12 axial von einer Bauteiloberfläche beabstandet im Bauteil 1 angeordnet. In einer alternativen Ausführungsform kann das erste axiale Ende 12 auch bündig mit der Bauteiloberfläche abschließen. Weiterhin weist der Drahtgewindeeinsatz 10 im Bauteil 1 das Nennmaß einer Gewindenorm auf, beispielsweise eines metrischen ISO-Gewindes oder eines Zoll-Gewindes.

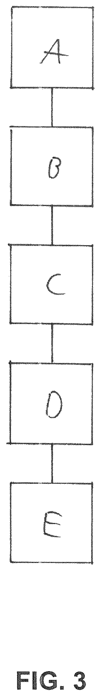

Benachbart dem ersten 12 und dem zweiten axialen Ende 14, in den Bereichen mit dem ersten und dem zweiten Innendurchmesser, ist zwischen den Windungen des Drahtgewindeeinsatzes 10 zumindest teilweise thermoplastischer Kunststoff vorhanden. Dies ergibt sich aufgrund des Herstellungsverfahrens, was später unter Bezugnahme auf Figur 3 erläutert wird. Hierdurch wird deutlich, dass es bei dem verwendeten Drahtgewindeeinsatz 10 gewünscht ist, dass bei der Bauteilherstellung Bauteilmaterial zwischen die einzelnen Windungen strömen kann. Im Inneren des Drahtgewindeeinsatzes 10 selbst ist jedoch kein Kunststoff vorhanden und der axial zwischen den Windungen vorhandene Kunststoff definiert höchstens zusätzlich das durch den Drahtgewindeeinsatz 10 allgemein bereitgestellte Innengewinde.

Der Drahtgewindeeinsatz weist weiterhin zwischen dem ersten 12 und dem zweiten axialen Ende 14 einen Bereich 16 mit mindestens einer verengten Windung auf. Der Bereich 16 mit der mindestens einen verengten Windung definiert einen dritten Innendurchmesser, der im Vergleich zum ersten und zweiten Innendurchmesser verringert ist. Der Bereich 16 mit drittem Innendurchmesser wird in der dargestellten Ausführungsform dadurch definiert, dass die mindestens eine verengte Windung einen Bereich von 360° des Gewindeverlaufs umfasst. Die mindestens eine verengte Windung weist mindestens einen Windungsabschnitt mit mindestens einer Sekante auf, die die verengte Windung radial einwärts verengt. Es ist ebenso bevorzugt, dass das Bauteil mindestens zwei verengte Windungen aufweist, die jeweils einen Bereich von 360° des Gewindeverlaufs umfassen. In dem so ausgestalteten Bereich 16 lässt sich eine Schraube 30 somit nicht frei Einschrauben, sondern sie muss mit erhöhtem Drehmoment montiert werden.

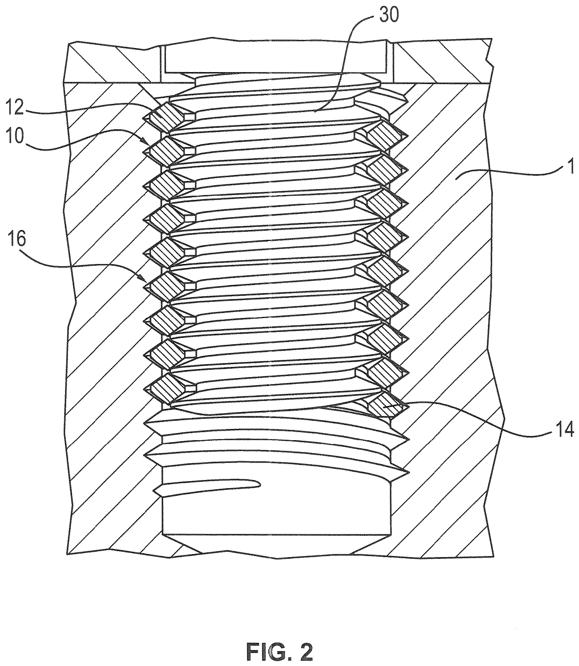

Aufgrund des spezifischen Herstellungsverfahrens des Bauteils 1 ist zwischen der radialen Außenseite des Bereichs 16 und der Bauteilinnenwand ein Freiraum vorhanden. Dieser Freiraum stellt das Funktionieren der Schraubensicherung des Drahtgewindeeinsatzes 10 bereit. Während des Einschraubens der Schraube 30 kann sich der Bereich 16 aufgrund des Freiraums radial nach außen bewegen und eine entsprechende Klemmung auf die Schraube 30 durch die elastische Rückstellkraft der mindestens einen verengten Windung ausüben. Figur 2 zeigt die entsprechend in den Bereich 16 eingeschraubte Schraube 30.

Während des Einschraubens der Schraube 30 in das Bauteil 1 durchläuft die Schraube folgende Bereiche des Drahtgewindeeinsatzes 10. Benachbart dem ersten axialen Ende 12 wird sie in einen ersten Bereich mit dem konstanten ersten Innendurchmesser eingeschraubt. Daran schließt sich der Bereich 16 mit verringertem dritten Innendurchmesser an. Danach folgt ein zweiter Bereich, der sich bis zum zweiten axialen Ende 14 erstreckt und den konstanten zweiten Innendurchmesser aufweist.

Ein Vorteil des Bauteils 1 ist, dass das Bauteil 1 besonders auf die Anforderungen eines bestimmten Anwendungsgebiets angepasst ist, nämlich die der Luftfahrtindustrie. Ein weiterer Vorteil des Bauteils 1 ist, dass das Bauteil 1 direkt mit dem gewünschten Drahtgewindeeinsatz 10 mit Schraubensicherungs-Funktion bereitgestellt ist, ohne dass ein gesondertes Einbringen des Drahtgewindeeinsatzes 10 durch einen Werker erforderlich ist, was nachfolgend unter Bezugnahme auf Figur 3 erläutert wird.

Figur 3 zeigt einen schematischen Verfahrensablauf einer Ausführungsform eines erfindungsgemäßen Herstellungsverfahrens. Zunächst wird in einem Schritt A ein Drahtgewindeeinsatz bereitgestellt, der ein erstes axiales Ende mit einem ersten Innendurchmesser und ein zweites axiales Ende mit einem zweiten Innendurchmesser sowie zwischen dem ersten und dem zweiten axialen Ende mindestens eine verengte Windung mit einem im Vergleich zum ersten und zweiten Innendurchmesser verringerten dritten Innendurchmesser aufweist. Der Drahtgewindeeinsatz weist dabei eine Steigung auf, die größer ist als eine später gewünschte Gewindesteigung einer zu erfüllenden Gewindenorm, wie beispielsweise eines metrischen ISO-Gewindes oder eines Zoll-Gewindes. Insbesondere weist der Drahtgewindeeinsatz nach seiner Herstellung und im Zustand seiner Bereitstellung zwar in radialer Richtung die erforderliche Maßhaltigkeit auf, mit Ausnahme der mindestens einen verengten Windung. In axialer Richtung weist er jedoch ein Übermaß auf. Dementsprechend ist der Drahtgewindeeinsatz nicht auf Block gewickelt und in axialer Richtung ist zwischen Windungen des Drahtgewindeeinsatzes ein Freiraum vorhanden. Die mindestens eine verengte Windung umfasst beispielsweise einen Bereich von 360° des Gewindeverlaufs. Ebenso weist die mindestens eine verengte Windung beispielhaft mindestens einen Windungsabschnitt mit mindestens einer Sekante auf, die die verengte Windung radial einwärts verengt. Es ist weiterhin bevorzugt, dass das Bauteil mindestens zwei verengte Windungen aufweist, die jeweils einen Bereich von 360° des Gewindeverlaufs umfassen.

In Schritt B erfolgt nun das Einschrauben eines mit einem Außengewinde versehenen Elements, beispielsweise ein Bolzen oder Spindelkern, in den Drahtgewindeeinsatz, sodass der Drahtgewindeeinsatz vollständig auf dem Bolzen angeordnet ist, wodurch die mindestens eine verengte Windung des Drahtgewindeeinsatzes aufgeweitet wird. Zusätzlich wird durch dieses Einschrauben der Drahtgewindeeinsatz aufgrund der im Vergleich zur Steigung des Drahtgewindeeinsatzes verringerten Gewindesteigung des Außengewindes des Bolzens axial komprimiert. Der Drahtgewindeeinsatz ähnelt daher einer Druckfeder. Alternativ kann der Drahtgewindeeinsatz auch einer Zugfeder ähneln, wobei dann die Gewindesteigung des Außengewindes des Bolzens vorzugsweise für eine axiale Längung anstelle einer Komprimierung sorgt.

Im nachfolgenden Schritt C wird der Bolzen mit Drahtgewindeeinsatz in einer Gussform angeordnet. Daraufhin erfolgt in Schritt D das Gießen von thermoplastischem Kunststoff mit einer Dauergebrauchstemperatur von mindestens 130 °C als Bauteilmaterial in die Gussform, wobei der Drahtgewindeeinsatz in axialer Richtung vollständig vom Bauteilmaterial umgeben wird. Im Hinblick auf die Materialeigenschaften des Bauteilmaterials wird auf die obigen Ausführungen verwiesen, um unnötige Wiederholungen zu vermeiden.

Während des Gießens des thermoplastischen Kunststoffs in die Gussform fließt der thermoplastische Kunststoff zumindest teilweise zwischen die Windungen des Drahtgewindeeinsatzes zwischen dem ersten und dem zweiten axialen Ende. Wie oben erläutert weist der Drahtgewindeeinsatz daher axialen Freiräume zwischen den Windungen auf, auch nach dem Einschrauben des Bolzens. Neben der Sicherstellung der Maßhaltigkeit des resultierenden Gewindes gewährleistet das Aufschrauben oder Aufspindeln auf den Bolzen oder die Gewindespindel ebenfalls, dass der Kunststoff im axialen Zwischenraum zwischen den Windungen des Drahtgewindeeinsatzes angepasst an die Form der Gewindespindel oder das Außengewinde des Bolzens erkaltet. Das resultierende Gewinde ist also in jedem Fall entsprechend an den Spindelkern oder Bolzen angepasst, auch wenn Kunststoff auf den Gewindeflanken des Drahtgewindeeinsatzes vorliegt.

Nach dem Gießen erkaltet der Kunststoff an der Außenseite des Bereichs mit der verengten Windung im aufgeweiteten Zustand. Nach dem Erkalten des Kunststoffs und dem Herausspindeln oder Herausschrauben des Bolzens federt der Bereich zurück, so dass später das erneute Auffedern dieses Bereichs des Drahtgewindeeinsatzes realisierbar ist. Auf diese Weise entsteht zwischen erkaltetem Kunststoff, der die Bauteilinnenwand darstellt, und der radialen Außenseite der mindestens einen verengten Windung ein Freiraum, der später zum elastischen Auffedern genutzt werden kann.

Abschließend erfolgt in Schritt E ein Entformen des Bauteils aus der Gussform sowie ein Ausschrauben des Bolzens, wodurch der Bereich in seine Ausgangsform zurückkehrt und im Bauteil ein Drahtgewindeeinsatz mit mindestens einer verengten Windung vorhanden ist, die bei Einschrauben einer Schraube radial nach außen bis zu einer Bauteilinnenwand bewegbar ist und so eine Schrauben-Sicherungsfunktion bereitstellt.

Aufgrund dieses Herstellungsverfahrens muss das Bauteil nicht erst mit einem Innengewinde bereitgestellt werden, in den der Drahtgewindeeinsatz eingebracht wird. Zusätzlich weist der eingeformte Drahtgewindeeinsatz auf diese Weise eine im Vergleich zum nachträglich eingebrachten Drahtgewindeeinsatz gemäß Stand der Technik höhere Auszugfestigkeit auf, was insbesondere im Bereich der Luftfahrtindustrie gewünscht ist.

### 6. Bezugszeichenliste

- 1: Bauteil
- 10: Drahtgewindeeinsatz
- 12: erstes axiales Ende
- 14: zweites axiales Ende
- 16: Bereich, der mindestens einer verengten Windung aufweist
- 30: Schraube

## Patentansprüche

1. Bauteil (1) mit einem darin eingeformten Drahtgewindeeinsatz (10), wobei der Drahtgewindeeinsatz (10)
a. ein erstes axiales Ende (12) mit einem ersten Innendurchmesser und ein zweites axiales Ende (14) mit einem zweiten Innendurchmesser umfasst,
b. in axialer Richtung vollständig in das Bauteil (1) eingeformt ist und
c. zwischen dem ersten (12) und dem zweiten axialen Ende (14) mindestens eine verengte Windung mit einem im Vergleich zum ersten und zweiten Innendurchmesser verringerten dritten Innendurchmesser umfasst, die radial nach außen bis zu einer Bauteilinnenwand bewegbar ist, **dadurch gekennzeichnet, dass**
d. das Bauteil (1) aus einem thermoplastischen Kunststoff mit einer Dauergebrauchstemperatur von mindestens 130 °C besteht und
e. der Drahtgewindeeinsatz (10) weist axiale Freiräume zwischen den Windungen auf, so dass zwischen den Windungen des Drahtgewindeeinsatzes (10) zwischen dem ersten (12) und dem zweiten axialen Ende (14) zumindest teilweise thermoplastischer Kunststoff vorhanden ist.

2. Bauteil (1) gemäß einem der vorhergehenden Patentansprüche, in dem die mindestens eine Windung mindestens einen Windungsabschnitt mit mindestens einer Sekante aufweist, die die verengte Windung radial einwärts verengt.

3. Bauteil (1) gemäß einem der vorhergehenden Patentansprüche, in dem die mindestens eine verengte Windung einen Bereich (16) von 360° des Gewindeverlaufs umfasst.

4. Bauteil (1) gemäß einem der vorhergehenden Patentansprüche, in dem mindestens zwei verengte Windungen vorgesehen sind, die jeweils einen Bereich (16) von 360° des Gewindeverlaufs umfassen.

5. Bauteil (1) gemäß einem der vorhergehenden Patentansprüche, in dem der thermoplastische Kunststoff eine Dauergebrauchstemperatur von mindestens 150 °C aufweist.

6. Bauteil (1) gemäß einem der vorhergehenden Patentansprüche, in dem der thermoplastische Kunststoff ein amorpher Kunststoff ist.

7. Bauteil (1) gemäß einem der vorhergehenden Patentansprüche, in dem der Drahtgewindeeinsatz (10) das Nennmaß einer Gewindenorm aufweist, insbesondere eines metrischen ISO-Gewindes oder eines Zoll-Gewindes.

8. Herstellungsverfahren für ein Bauteil (1) gemäß einem der Patentansprüche 1 bis 7, das die Schritte umfasst:
a. Bereitstellen eines Drahtgewindeeinsatzes (10), der ein erstes axiales Ende (12) mit einem ersten Innendurchmesser und ein zweites axiales Ende (14) mit einem zweiten Innendurchmesser sowie zwischen dem ersten (12) und dem zweiten axialen Ende (14) mindestens eine verengte Windung mit einem im Vergleich zum ersten und zweiten Innendurchmesser verringerten dritten Innendurchmesser aufweist,
b. Einschrauben eines mit einem Außengewinde versehenen Elements in den Drahtgewindeeinsatz (10), sodass der Drahtgewindeeinsatz (10) vollständig auf dem mit dem Außengewinde versehenen Element angeordnet ist, wodurch die mindestens eine verengte Windung des Drahtgewindeeinsatzes (10) aufgeweitet wird, sowie
c. Anordnen des mit dem Außengewinde versehenen Elements mit Drahtgewindeeinsatz (10) in einer Gussform und das Verfahren ist **gekennzeichnet durch** die weiteren Schritte:
d. Gießen von thermoplastischem Kunststoff mit einer Dauergebrauchstemperatur von mindestens 130 °C als Bauteilmaterial in die Gussform, wobei der Drahtgewindeeinsatz (10) in axialer Richtung vollständig vom Bauteilmaterial umgeben wird, und
e. Entformen des Bauteils (1) aus der Gussform sowie Ausschrauben des mit dem Außengewinde versehenen Elements, wodurch die mindestens eine verengte Windung in ihre Ausgangsform zurückkehrt und im Bauteil (1) ein Drahtgewindeeinsatz (10) mit mindestens einer verengten Windung vorhanden ist, die radial nach außen bis zu einer Bauteilinnenwand bewegbar ist, wobei
f. der Drahtgewindeeinsatz (10) vor der Anordnung auf dem mit dem Außengewinde versehenen Element eine Steigung aufweist, die größer ist als die Steigung des Außengewindes des mit dem Außengewinde versehenen Elements, sodass der Drahtgewindeeinsatz (10) auf dem mit dem Außengewinde versehenen Element axial komprimiert und die mindestens eine verengte Windung radial aufgeweitet wird.

9. Herstellungsverfahren gemäß Patentanspruch 8, wobei während des Gießens von thermoplastischem Kunststoff in die Gussform der thermoplastische Kunststoff zumindest teilweise zwischen die Windungen des Drahtgewindeeinsatzes (10) zwischen dem ersten (12) und dem zweiten axialen Ende (14) fließt.

10. Herstellungsverfahren gemäß einem der Patentansprüche 8 oder 9, in dem die mindestens eine Windung mindestens einen Windungsabschnitt mit mindestens einer Sekante aufweist, die die verengte Windung radial einwärts verengt.

11. Herstellungsverfahren gemäß einem der Patentansprüche 8 bis 10, in dem die mindestens eine verengte Windung einen Bereich (16) von 360° des Gewindeverlaufs umfasst.

12. Herstellungsverfahren gemäß einem der Patentansprüche 8 bis 11, in dem mindestens zwei verengte Windungen vorgesehen sind, die jeweils einen Bereich (16) von 360° des Gewindeverlaufs umfassen.

13. Herstellungsverfahren gemäß einem der Patentansprüche 8 bis 12, in dem der thermoplastische Kunststoff eine Dauergebrauchstemperatur von mindestens 150 °C aufweist und/oder in dem der thermoplastische Kunststoff ein amorpher Kunststoff ist.

14. Herstellungsverfahren gemäß einem der Patentansprüche 8 bis 13, bei dem der Drahtgewindeeinsatz (10) durch den Schritt des Anordnens auf dem mit dem Außengewinde versehenen Element ein Nennmaß einer Gewindenorm aufweist, insbesondere eines metrischen ISO-Gewindes oder eines Zoll-Gewindes.

## Claims

1. Component (1) with a wire thread insert (10) molded therein, wherein the wire thread insert (10)
a. comprises a first axial end (12) with a first inner diameter and a second axial end (14) with a second inner diameter,
b. is completely molded into the component (1) in the axial direction and
c. comprises between the first (12) and the second axial end (14) at least one narrowed turn with a third inner diameter which is reduced in comparison to the first and the second inner diameter, wherein the at least one narrowed turn is movable radially outwards up to an inner wall of the component, **characterized in that**
d. the component (1) is made of a thermoplastic material having a temperature of continued use of at least 130 °C and
e. the wire thread insert (10) comprises axial lee ways between the turns so that thermoplastic material is present at least partially between the turns of the wire thread insert (10) between the first (12) and the second axial end (14).

2. Component (1) according to one of the preceding claims, in which the at least one turn comprises at least one turn section with at least one secant which narrows the narrowed turn radially inwards.

3. Component (1) according to one of the preceding claims, in which the at least one narrowed turn (16) covers an area (16) of 360° of the thread course.

4. Component (1) according to one of the preceding claims, in which at least two narrowed turns are provided, each of which covers an area (16) of 360° of the thread course.

5. Component (1) according to one of the preceding claims, in which the thermoplastic material has a temperature of continued use of at least 150 °C.

6. Component (1) according to one of the preceding claims, in which the thermoplastic material is an amorphous plastic.

7. Component (1) according to one of the preceding claims, in which the wire thread insert (10) has the nominal dimension of a thread standard, in particular a metric ISO thread or an inch thread.

8. Manufacturing method for a component (1) according to one of the claims 1 to 7, which comprises the following steps:
a. providing a wire thread insert (10) having a first axial end (12) with a first inner diameter and a second axial end (14) with a second inner diameter as well as between the first (12) and second axial end (14) at least one narrowed turn with a third inner diameter which is reduced compared to the first and the second inner diameter,
b. screwing an element having an outer thread into the wire thread insert (10) so that the wire thread insert (10) is arranged completely on the element having the outer thread, so that the at least one narrowed turn of the wire thread insert (10) is expanded, as well as
c. arranging the element having the outer thread with wire thread insert (10) in a casting mold and the method is **characterized by** the further steps:
d. casting thermoplastic material with a temperature of continued use of at least 130 °C as component material into the casting mold, wherein the wire thread insert (10) is completely surrounded by the component material in axial direction, and
e. demolding the component (1) from the casting mold and unscrewing the element having the outer thread, so that the at least one narrowed turn returns to its original shape and a wire thread insert (10) with at least one narrowed turn is present in the component (1), wherein the narrowed turn is movable radially outwards up to an inner wall of the component, wherein
f. prior to being arranged on the element comprising the outer thread, the wire thread insert (10) has a pitch which is greater than the pitch of the outer thread of the element that is provided with the outer thread, so that the wire thread insert (10) on the element that is provided with the outer thread is axially compressed and the at least one narrowed turn is radially expanded.

9. Manufacturing method according to claim 8, wherein during the casting of thermoplastic material into the casting mold, the thermoplastic material flows at least partially between the turns of the wire thread insert (10) between the first (12) and the second axial end (14).

10. Manufacturing method according to one of the claims 8 or 9, in which the at least one turn comprises at least one turn section having at least one secant which narrows the narrowed turn radially inwards.

11. Manufacturing method according to one of the claims 8 to 10, in which the at least one narrowed turn (16) covers an area (16) of 360° of the thread course.

12. Manufacturing method according to one of the claims 8 to 11, in which at least two narrowed turns are provided, each of which covers an area (16) of 360° of the thread course.

13. Manufacturing method according to one of the claims 8 to 12, in which the thermoplastic material has a temperature of continued use of at least 150 °C and/or in which the thermoplastic material is an amorphous plastic.

14. Manufacturing method according to one of the claims 8 to 13, in which, due to the step of being arranged on the element that is provided with the outer thread, the wire thread insert (10) has a nominal dimension of a thread standard, in particular of a metric ISO thread or an inch thread.

## Revendications

1. Composant (1) pourvu d'un insert fileté filaire (10) moulé à l'intérieur de celui-ci, dans lequel l'insert fileté filaire (10)
a. comporte une première extrémité axiale (12) avec un premier diamètre intérieur et une deuxième extrémité axiale (14) avec un deuxième diamètre intérieur,
b. est moulé entièrement dans le composant (1) dans la direction axiale et
c. comporte, entre la première (12) et la deuxième extrémité axiale (14), au moins une spire rétrécie dotée d'un troisième diamètre intérieur réduit en comparaison avec le premier et le deuxième diamètre intérieur, laquelle est déplaçable radialement vers l'extérieur jusqu'à une paroi intérieure de composant, **caractérisé en ce que**
d. le composant (1) est constitué d'une matière synthétique thermoplastique présentant une température d'utilisation continue d'au moins 130 °C et
e. l'insert fileté filaire (10) présente des espaces libres axiaux entre les spires, de sorte que de la matière synthétique thermoplastique est présente au moins partiellement entre les spires de l'insert fileté filaire (10) entre la première (12) et la deuxième extrémité axiale (14).

2. Composant (1) selon l'une des revendications précédentes, dans lequel l'au moins une spire présente au moins une section de spire avec au moins une sécante, laquelle rétrécit la spire rétrécie radialement vers l'intérieur.

3. Composant (1) selon l'une des revendications précédentes, dans lequel l'au moins une spire rétrécie comporte une plage (16) de 360° de l'évolution du filetage.

4. Composant (1) selon l'une des revendications précédentes, dans lequel il est prévu au moins deux spires rétrécies, lesquelles comportent respectivement une plage (16) de 360° de l'évolution du filetage.

5. Composant (1) selon l'une des revendications précédentes, dans lequel la matière synthétique thermoplastique présente une température d'utilisation continue d'au moins 150 °C.

6. Composant (1) selon l'une des revendications précédentes, dans lequel la matière synthétique thermoplastique est une matière synthétique amorphe.

7. Composant (1) selon l'une des revendications précédentes, dans lequel l'insert fileté filaire (10) présente la dimension nominale d'une norme de filetage, en particulier d'un filetage ISO métrique ou d'un filetage en pouce.

8. Procédé de fabrication d'un composant (1) selon l'une des revendications 1 à 7, comportant les étapes suivantes :
a. mise à disposition d'un insert fileté filaire (10), lequel présente une première extrémité axiale (12) avec un premier diamètre intérieur et une deuxième extrémité axiale (14) avec un deuxième diamètre intérieur, ainsi qu'au moins une spire rétrécie entre la première (12) et la deuxième extrémité axiale (14), laquelle est dotée d'un troisième diamètre intérieur réduit en comparaison avec le premier et le deuxième diamètre intérieur,
b. vissage d'un élément pourvu d'un filetage extérieur dans l'insert fileté filaire (10), de telle façon que l'insert fileté filaire (10) est disposé entièrement sur l'élément pourvu du filetage extérieur, moyennant quoi l'au moins une spire rétrécie de l'insert fileté filaire (10) est élargie, et
c. disposition de l'élément pourvu d'un filetage extérieur avec l'insert fileté filaire (10) dans un moule et le procédé est **caractérisé par** les étapes supplémentaires suivantes :
d. coulage de matière synthétique thermoplastique présentant une température d'utilisation continue d'au moins 130 °C en tant que matériau de composant dans le moule, dans lequel l'insert fileté filaire (10) est entièrement entouré de matériau de composant dans la direction axiale, et
e. démoulage du composant (1) hors du moule et dévissage de l'élément pourvu d'un filetage extérieur, moyennant quoi l'au moins une spire rétrécie revient à sa forme initiale et un insert fileté filaire (10) doté d'au moins une spire rétrécie déplaçable radialement vers l'extérieur jusqu'à une paroi intérieure de composant est présent dans le composant (1), dans lequel
f. avant la disposition sur l'élément pourvu d'un filetage extérieur, l'insert fileté filaire (10) présente un pas plus grand que le pas du filetage extérieur de l'élément pourvu d'un filetage extérieur, de sorte que l'insert fileté filaire (10) est comprimé axialement sur l'élément pourvu d'un filetage extérieur et l'au moins une spire rétrécie est élargie radialement.

9. Procédé de fabrication selon la revendication 8, dans lequel, pendant le coulage de matière synthétique thermoplastique dans le moule, la matière synthétique thermoplastique s'écoule au moins partiellement entre les spires de l'insert fileté filaire (10) entre la première (12) et la deuxième extrémité axiale (14).

10. Procédé de fabrication selon l'une des revendications 8 ou 9, dans lequel l'au moins une spire présente au moins une section de spire avec au moins une sécante, laquelle rétrécit la spire rétrécie radialement vers l'intérieur.

11. Procédé de fabrication selon l'une des revendications 8 à 10, dans lequel l'au moins une spire rétrécie comporte une plage (16) de 360° de l'évolution du filetage.

12. Procédé de fabrication selon l'une des revendications 8 à 11, dans lequel il est prévu au moins deux spires rétrécies, lesquelles comportent respectivement une plage (16) de 360° de l'évolution du filetage.

13. Procédé de fabrication selon l'une des revendications 8 à 12, dans lequel la matière synthétique thermoplastique présente une température d'utilisation continue d'au moins 150 °C et/ou dans lequel la matière synthétique thermoplastique est une matière synthétique amorphe.

14. Procédé de fabrication selon l'une des revendications 8 à 13, dans lequel l'insert fileté filaire (10) présente une dimension nominale d'une norme de filetage, en particulier d'un filetage ISO métrique ou d'un filetage en pouce, du fait de l'étape de la disposition sur l'élément pourvu d'un filetage extérieur.
